Europäisches Patentamt

European Patent Office

Office européen des brevets

(19)

(11) Publication number : **0 475 991 B1**

## (12) EUROPEAN PATENT SPECIFICATION

(45) Date of publication of patent specification :
02.11.94 Bulletin 94/44

(51) Int. Cl.[5] : **G02B 21/00**

(21) Application number : **90908588.8**

(22) Date of filing : **05.06.90**

(86) International application number :
**PCT/GB90/00868**

(87) International publication number :
**WO 90/15352 13.12.90 Gazette 90/28**

(54) SCANNING OPTICAL MICROSCOPE.

(30) Priority : **07.06.89 GB 8913129**

(43) Date of publication of application :
**25.03.92 Bulletin 92/13**

(45) Publication of the grant of the patent :
**02.11.94 Bulletin 94/44**

(84) Designated Contracting States :
**DE FR GB NL**

(56) References cited :
**GB-A- 2 113 501**
**US-A- 3 913 128**
**Review of Scientific Instruments, vol. 59, no. 11, November 1988, American Institute of Physics, (New York, NY, US), Ching-Bo Juang: "Disign and application of a computer-controlled confocal scanning differential polarization microscope", pp 2399-2408**
**Optical Engineering, vol. 28, no. 6, June 1989, Society of Photo-Optical Instrumentation Engineers, (Bellingham, WA, US), B. Jaggi et al.: "Design of a solid-state microscope", pp 675-682**
**Optical Engineering, vol. 27, no. 9, September 1988, Society of Photo-Optical Instrumentation Engineers, (Bellingham, WA, US), A. Liljeborg: "Digital position encoding of galvanometer scanner in a laser microscope", pp 818-822**

(56) References cited :
Optik, vol. 79, no. 3, June 1988, Wissenschaftliche Verlagsgesellschaft mbH, (Stuttgart, DE) ; B. Neumann : "Amplitudenmodulationskontrast", pages 123-127.

(73) Proprietor : **THE SECRETARY OF STATE FOR DEFENCE IN HER BRITANNIC MAJESTY'S GOVERNMENT OF THE UNITED KINGDOM OF GREAT BRITAIN AND NORTHERN IRELAND;**
**Whitehall**
**London SW1A 2HB (GB)**

(72) Inventor : **WALKER, John, Graham**
**16 Copse Road**
**Haslemere**
**Surrey GU27 3QH (GB)**
Inventor : **PIKE, Edward, Roy**
**8 Brendon Grove**
**Malvern, Worcestershire WR14 3JR (GB)**
Inventor : **BERTERO, Mario**
**Via Antia Romana di Quinto 10/15B**
**I-16166 Genova (IT)**

(74) Representative : **Beckham, Robert William et al**
**Defence Research Agency**
**Intellectual Property Department**
**DRA Farnborough**
**Farnborough, Hants. GU14 6TD (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 475 991 B1

## Description

This invention concerns enhanced resolution in scanning optical microscopes.

One known scanning optical microscope is a Scanning Confocal Microscope (SCM) described in Sheppard and Choudhury, Optica Acta,24,1051,1977; and Brakenhoff, J.of Microscopy,117,219,1979.

In this SCM a parallel beam of laser light is focused by an illuminating lens onto a small portion of an object. Light from this small portion is imaged by an image lens via a pinhole located in the focal plane onto a single detector. The pinhole and the centre of the illumination beam are aligned to be confocal. The image is built up by scanning the object and recording the output from the detector for each object position. Such a microscope has enhanced resolution over conventional microscopes.

An improvement over SCM is described in GB 2, 113, 501. In this the pinhole and single detector of the SCM are replaced by an array of detectors. Output from this array is transformed to provide additional information and hence improved resolution. For the case of a transmission or reflection coherent microscope the resolution improvement is in both amplitude and phase images; for a fluorescent microscope the improved resolution is in the intensity image. However in the coherent cases, to produce the transform the complex amplitude of the light field falling on each detector in the array is needed. To achieve this either some form of interferometer must be incorporated into the microscope such that a reference beam also falls onto the detector array or some other means of phase measurement must be employed. In the fluorescent case a two dimensional array of detectors is required.

For a transmission or reflection microscope, the present invention improves the amplitude image resolution obtainable from a SCM without the necessity of employing a reference beam or other means of phase measurement; although these methods may still be employed if a high resolution phase image is also required. For a fluorescent microscope the present invention reduces the number of detectors required to two and simplifies the electronic signal processing.

According to this invention resolution is enhanced by performing optical signal processing prior to detection. Such processing is achieved by an element or elements having either or both phase and amplitude weighting. The terms light and optical are herein defined to include wavelengths either side of the visible wavelengths; the limits being determined by the availability of suitable light sources, e.g. lasers, and detectors.

According to this invention a scanning confocal microscope includes:-

a first lens system for foocussing light to illuminate a small portion of an object,

a second lens system for receiving light, which may be transmitted, reflected or fluorescent, from the small portion of the object and directing such received light onto a detector or detectors,

means for scanning the object with respect to the focussed light,

means for storing the output of the detectors or detectors to provide a display or displays of the scanned object,

Characterised by:-

an optical processing element or elements having either or both a periodic phase and a periodic amplitude weighting by light modulation that receives light from the second lens system and performs an optical processing on such light prior to detection by the detector or detectors whereby the resolution obtained at the detectors is improved.

An additional lens or lenses may be arranged between the optical processing element or elements and the detector or detectors, or the element or elements may be arranged to pass its light output onto the detector or detectors without such additional lens or lenses.

Such an optical processing element has an optical weighting function $m(x,y)$. For example, for a transmission or reflection microscope with square apertures and ideal lenses preferably the weighting function $m(x,y)$ is equal to $cos(2\pi Nx/\lambda).cos(2\pi Ny/\lambda)$ where $N$ is the numerical aperture of the first and second lens systems and $\lambda$ is wavelength. In this example the element has both a phase and amplitude weighting to incident light. The phase weighting may be achieved by etching grooves in the surface of a glass plate, whilst the amplitude weighting may be a variable density of photographic emulsion on the surface of a second glass plate. Both glass plates may be aligned and fixed together to form the optical processing element. Alternatively computer generated holographic plates may be used to achieve the same effect. For systems having a circular pupil the optical element has circular symmetry to the weighting function eg. the weighting appears as a set of concentric rings.

For other shaped apertures (e.g. circular) and non-ideal lenses the preferable weighting function may be calculated e.g., by the techniques of singular systems analysis (Optica Acta, 1984, Vol.31, No.8, pp923-946).

The microscope may operate on light transmitted through, reflected off or fluorescing from a scanned object.

The invention will now be described, by way of example, only, with reference to the accompanying drawings in which:-

Figure 1 is a diagrammatic representation of a transmission scanning microscope,

Figure 2 is an exploded view of part of Figure 1,

Figure 3 is a diagrammatic representation of a reflection scanning microscope,

Figure 4 is a diagrammatic representation of a fluorescent scanning microscope,

Figure 5a is a graph of the transfer function of a conventional confocal fluorescent scanning microscope, and

Figure 5b is a graph of the transfer function of the fluorescent scanning microscope shown in Figure 4.

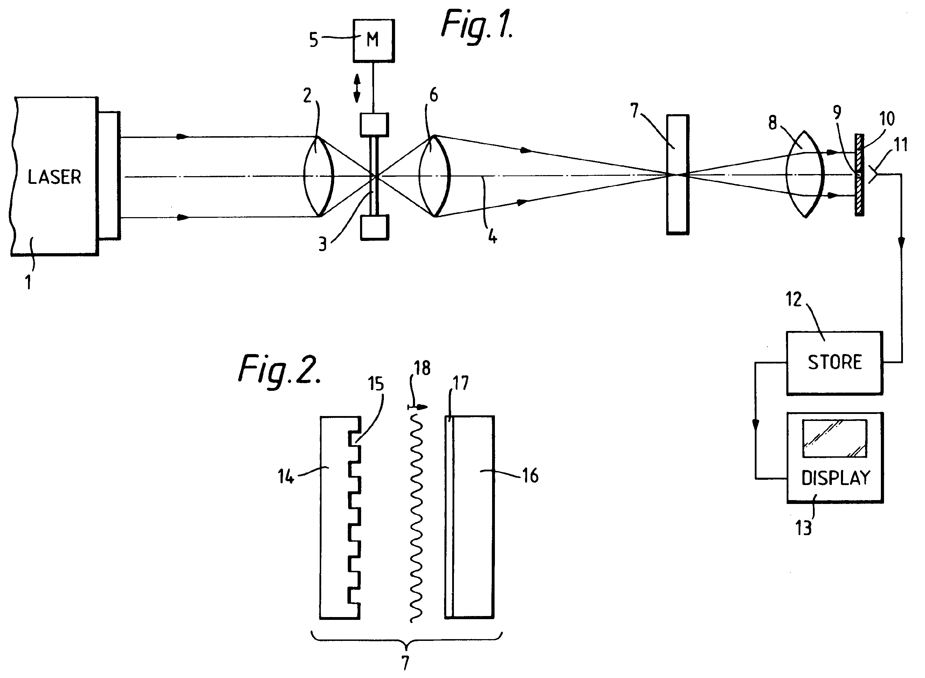

The scanning microscope of Figure 1 comprises a laser 1 whose parallel light output is directed onto an illuminating lens 2 of typically x100 magnification. The laser 1 may be HeCd laser operating at a wavelength of .325$\mu m$. An object 3 to be measured is arranged at the focus of the object lens 2, i.e., the object plane, and is mounted for movement across the optical axis 4 of the microscope by a motor and drive 5. This allows scanning in an x-direction; a second and third motor and drive (not shown) orthogonal to the first motor allows scanning in the y and z-directions. An image lens 6 is arranged to receive light from the object and focus it onto an optical processing plate 7 arranged at the image plane of lens 6. From this plate 7 light is focused by a further lens 8 onto a pinhole aperture 9 in a stop plate 10 and measured by a detector 11 such as a photo-diode detector. Output from the detector 11 is to a store 12 including a storage medium such as video tape for subsequent display on a television monitor 13. Both object and image lenses 2, 6 have the same numerical aperture N, typically about 1.2.

Apart from the optical processing element 7 and the lens 8 this is similar to conventional scanning confocal microscopes (SCM). With such microscopes the image from the image lens is focused at the pinhole 9.

The purpose of the optical processing plate 7 is to multiply the image plane by a predetermined function to improve the resolution obtained at the detector 11. The optimum weighting function m(x,y), for the example of square apertures and ideal lenses, is equal to $cos(2\pi Nx/\lambda).cos(2\pi Ny/\lambda)$ where $N$ is the numerical aperture of the lens 2, 6 and $\lambda$ is wavelength. Alternatively a simple phase weighting function of constant amplitude but with the same phase as the above cosine function may be used ie.

$$m(x,y) = sign(cos(2\pi Nx/\lambda)).sign(cos(2\pi Ny/\lambda)).$$

It can be shown, as detailed later, that the optical processing element 7 is either or both phase and amplitude weighted. This is achieved in one form by the composite plate shown in Figure 2. A phase plate 14 is shaped on one surface into a rectangular grating 15 having a pitch of twice the Rayleigh distance in the image plane which for an object lens of x100 is about 50$\mu m$; and a depth of $\lambda/2(n - 1)$ where $\lambda$ is wavelength and $n$ is the refractive index of the glass plate 14.

One way of producing a phase weighting on the plate 14 is to use an optical beam writer under computer control to produce a square (Ronchi) grating of 1:1 ratio in photoresist on the glass plate 14. After development of the photoresist to produce a mask the glass is etched to a depth of $\lambda/2(n - 1)$ and the remaining photoresist removed.

An amplitude weighting element 16 may be produced on glass as follows. A layer 17 of photographic emulsion is deposited on the glass and exposed to light from an optical beam writer using a grey level scale to encode a sinusoidal transmission amplitude after development; this variation in absorption is indicated by line 18. The frequency of the amplitude grating is twice that of the phase weighting 15 on the phase element 14.

After both phase and amplitude elements 14, 16 have been formed they are placed with the gratings in contact in a parallel laser beam and their relative positions adjusted until two equal bright first order diffraction spots emerge and are then glued along their edges using an ultraviolet curing optical cement to form a single element.

For some applications the phase plate 14 and grating 15 may be used alone, without plate 16.

Other methods may be used to provide the optical processing element. For example two plates may be surface profiled by embossing. Alternatively a single surface may be photographically processed to provide two layers, one having a phase and the other an amplitude weighting function. The optical processing element may be produced by techniques known in the production of holographic images. Production of gratings by photodissolution (or photo doping) in chalcogenide glasses is well documented. See for example, A E Owens et al, "Photo Induced structures and Physico-chemical changes in Amorphous chalcogenide Semiconductors", Philosophical Magazine, B52, No.3, pp.347-362, (1985); A P Firth et al, "Inorganic Resists Based on Photo-Doped As-S Films", SPIE Advances in Resist Technology and Processing 2, Vol.539, pp160-165, (1985). Holographic techniques using interference of two or more wavefronts are described in:- M I Kostyshia et al "The use of light sensitive semiconductor-metal systems for holographic applications", Applications of Holography, Proc of the International Symposium of Holography, edited by J-Ch Vienot et al (Univ Besancon France 1970) paper 11.7; S A Keneman, "Hologram storage in Arsenic Trisulphide Thin Films", App Phys Lett. Vol.19, No.6, pp.205-207 (1971).

In operation an object to be scanned is prepared as usual. This involves placing on a slide and thinning to the required thickness, eg 20 to 100$\mu m$. The slide is then mounted in the object plane as shown and raster scanned across the optical path as the detector measures the amplitude of light received from each illuminated spot (pixel) on the object. The store records each pixel information for display on the screen 13. The slide may be raster scanned by indexing in typical steps of $\lambda/4$ or be translated uniformly a line at a time. The figure of $\lambda/4$ is the Nyquist sampling interval for the point spread function given by equation 9, for $N = 1$.

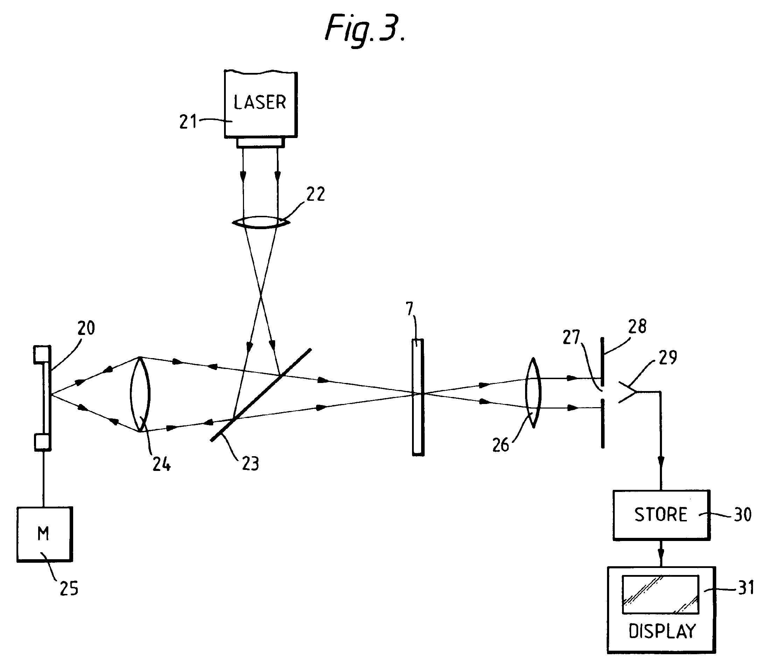

The microscope shown in Figure 3 is similar to that of Figure 1 but operates on light reflected from an object 21. A laser 21 has its output directed via an object lens 22 onto a reflecting beam splitter 23. From this beam splitter 23 light is focused by an image lens 24 onto the object 20. As before the object 20 is movable for scanning by a motor 25. Light reflected off the object 20 is focused by the image lens 24 through the beam splitter 23 onto an optical processing element 7 for processing as in Figure 1. Processed light is focused by an additional lens 26 through a pinhole aperture 27 in a stop plate 28 and onto a detector 29. Output from the detector 29 is to a store 30 for viewing on a display 31. Operation is as described for Figure 1.

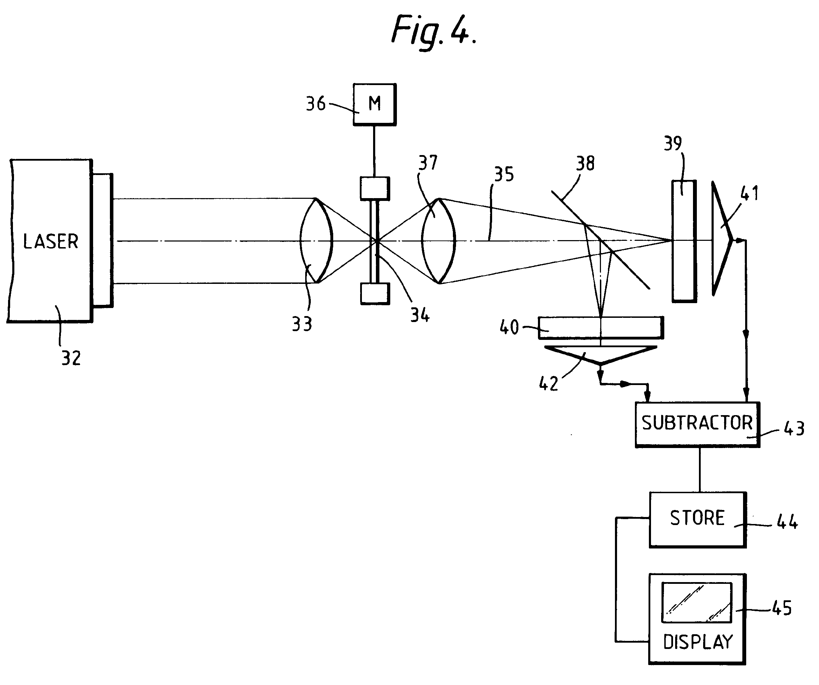

The microscope shown in Figure 4 is similar to that of Figure 1 but operates on fluorescent light from an object 34. A laser 32 has its output directed via an object lens 33 onto the object 34. As before the object 34 is movable about the optical axis 35 by a motor 36. Fluorescent light from the object 34 is focused by the image lens 37 through the beam splitter 38 to form two images on optical processing elements 39 and 40. These elements are amplitude weighted only and have different weightings; eg. 39 is denoted as the positive element and 40 the negative element. All the light intensity transmitted through element 39 is directed onto detector 41 and all light transmitted through element 40 is directed onto detector 42. Additional lenses not shown may be used for this. The outputs from the two detectors 41 and 42 are to a subtractor 43. The output of the subtractor 43 is the input from the detector 41 behind the positive element 39 minus the input from the detector 42 behind the negative element 40. Output from the subtractor 43 is to a store 44 for viewing on a display 45. Operation is as described for Figure 1 except that sample preparation is as usual for fluorescent microscopy. An alternative arrangement is to detect the fluorescent light which emerges at the same side of the object as the illumination by using another beam splitter similar to the one in Figure 3.

An alternative arrangement to the beamsplitter 38 and elements 39 and 40 is to use a single element in the focal plane with both reflecting and transmitting parts. For the case of circular pupils these would consist of spaced concentric rings or ellipses of reflective material (eg. silver), arranged such that the transmitted light falls on detector 39 and the reflected on detector 40.

The theoretical basis for the enhanced resolving power of this invention is as follows:- to simplify the notation, this analysis is presented in one spatial dimension; extension to the two and three dimensional cases is straightforward. The theory presented first relates to the case of a transmission microscope and coherent illumination illustrated in Figure 1 but is also applicable to the reflection microscope of Figure 3. When in the course of scanning the object is centred at position $\Delta x$, in the object plane 3, the complex amplitude in the plane immediately behind the object, $o'(x)$, is given by,

$$o'(x) = o(x - \Delta x).J_o(x), \quad 1$$

where $o(x)$ is the object form and $J_o(x)$ is the form of the amplitude at the focus of the object lens 2. The complex amplitude at position $x$ in the image plane immediately in front of the element 7 with the object at position $\Delta x$, denoted by $i(x, \Delta x)$, is given, neglecting magnification and image inversion, by the application of the coherent imaging equation to (1),

$$i(x, \Delta x) = \int o'(x').J_i(x - x')dx'$$
$$i(x, \Delta x) = \int o(x' - \Delta x)J_o(x').J_i(x - x')dx' \quad 2$$

where $J_i(x)$ is the amplitude point spread function associated with the image lens 6. The amplitude immediately behind the element 7 is given by the product of $i(x, \Delta x)$ and the effective complex amplitude transmittance of the element $m(x)$. The lens 8 and the pinhole 9 are arranged such that the lens forms the Fourier transform of the amplitude leaving the element 7 and the pinhole is at the centre of this transform. The effect of this arrangement is to sum or integrate (by taking the DC term from the Fourier transform) the complex amplitude of the light leaving the element 7. Thus the complex amplitude at the detector, $i_m(\Delta x)$, is given by,

$$i_m(\Delta x) = \int i(x, \Delta x).m(x)dx. \quad 3$$

Substituting equation (2) into (3) gives the following expression for the amplitude at the detector when the object is at position $\Delta x$,

$$i_m(\Delta x) = \int \int o(x' - \Delta x)J_o(x')J_i(x - x').m(x)dx'dx. \quad 4$$

Using the symbol $\otimes$ to denote convolution the form of the amplitude at the detector may be expressed as,

$$i_m(x) = o(x) \otimes (J_o(x).(J_i(- x) \otimes m(x))). \quad 5$$

Hence the amplitude point spread function ,$psf(x)$, obtained with this optical arrangement is given by,

$$psf(x) = J_o(x).(J_i(x) \otimes m(x)). \quad 6$$

That this point spread function can exhibit enhanced resolving power is now shown by an example. Consider the case where 2 and 6 are identical aberration free lenses of numerical aperture $N$ then,

$$J_o(x) = J_i(x) = sinc(\frac{2\pi Nx}{\lambda}) \quad 7$$

For this case, by using simple Fourier analysis, the preferable form of m(x) may easily be shown to be,

$$m(x) = cos(\frac{2\pi Nx}{\lambda}). \quad 8$$

Substituting equations (7) and (8) into (6) the effective amplitude point spread function, obtained using an element of this transmittance, is given by,

$$psf(x) = sinc(\frac{2\pi Nx}{\lambda}).(sinc(\frac{2\pi Nx}{\lambda}) \otimes cos(\frac{2\pi Nx}{\lambda})) = sinc(\frac{4\pi Nx}{\lambda}) \quad 9$$

which gives better resolution (in terms of reproducing in the image higher object spatial frequencies with more power) than either a conventional microscope with a point spread function of $sinc(\frac{2\pi Nx}{\lambda})$ or a scanning confocal microscope without an optical processing element which has a point spread function of $sinc^2(\frac{2\pi Nx}{\lambda})$.

This second analysis relates to the case of the fluorescent microscope illustrated in Figure 4. If $f(y)$ is the distribution of the fluorescent centres in the focal plane and if $S_1(x),S_2(x)$ are the point-spread functions of the illuminating and imaging lenses, respectively, then the intensity distribution $g(x)$ in the image plane is

$$g(x) = \int S_2(x - y)S_1(y)f(y)dy \quad 10$$

To a translation -z corresponds a new object, $f(y + z)$, and a new image, $g(z,x)$,

$$g(z,x) = \int S_2(x - y)S_1(y)f(y + z)dy \quad 11$$

We consider, for the sake of illustration, in detail the one-dimensional problem, a staightforward numerical extension of this is required for the two and three dimensional problems. We assume identical ideal lenses and ignore the small change of wavelength in fluorescence. We assume that both object and image are elements of $L^2(-\infty,\infty)$; our problem then becomes the inversion of the equation

$$g = Af \quad 12$$

where the integral operator A is given by

$$(Af)(x) = \int sinc^2(x - y)sinc^2(y)f(y)dy \quad 13$$

It will be sufficient to reconstruct the solution of equation (3) at the point $y = 0$.

The null space $N(A)$ of the operator defined by equation (4) is not trivial. We shall call the elements of $N(A)$ invisible. An arbitrary object $f(y)$ can be uniquely decomposed into a component $N(A)$ and a component orthogonal to N(A), its transmitted component. The transmitted component is band-limited with bandwidth $4\pi$. The adjoint operator $A*$ is defined by

$$(A^* g)(x) = sinc^2(y) \int sinc^2(x - y)g(x)dx \quad 14$$

$A$ is a compact operator and more precisely of Hilbert-Schmidt class. It thus has a singular system, ie., the set of triples $(\alpha_k;u_k,v_k)_{k=0}^{\infty}$ which solve the coupled homogeneous equations

$$Au_k = \alpha_k v_k, A^* v_k = \alpha_k u_k \quad 15$$

The generalised solution $f^+(y)$ has an expansion in terms of singular functions

$$f^+(y) = \sum_{k=0}^{\infty} \frac{1}{\alpha_k}(g, v_k)u_k(y) \qquad 16$$

where $(g,v_k)$ is the $L^2$ scalar product. From the relation

$$(g,v_k) = (Af,v_k) = (f,A^* v_k) = \alpha_k(f,u_k) \quad 17$$

we obtain, after scanning

$$f^+(z) = \int t(z - y)f(y)dy \quad 18$$

where

$$t(y) = \sum_{k=0}^{\infty} u_k(0)u_k(y) \qquad 19$$

$t(y)$ is the point spread function, or impulse response, we require to calculate. This requires the solution of the problem: given an arbitrary object $f(y)$, determine its invisible component. $N(A)$ contains all the functions whose Fourier transform is zero over the band $[-4\pi, 4\pi]$. This subset will be denoted by $N_0(A)$. The interesting part of the null space is the subspace of the functions solving $A\phi(y) = 0$ with bandwidth $4\pi$. This subset will be denoted by $N_1(A)$. Using the definition of $A$ in equation (13) we may obtain an equation for the Fourier transform $\Phi(\omega)$

of $\phi(y)$ as follows

$$\Psi(\omega) = \int_{\omega-2\pi}^{\omega} \Phi(\nu)d\nu + \frac{1}{2\pi}\int_{\omega-2\pi}^{\omega}(\omega-\nu)[\Phi(\nu+2\pi)-\Phi(\nu)]d\nu = 0, |\omega| < 2\pi$$

20

The first and second derivatives of $\Psi(\omega)$ exist and are given by

$$\Psi'(\omega) = \frac{1}{2\pi}\int_{\omega-2\pi}^{\omega}[\Phi(\nu+2\pi)-\Phi(\nu)]d\nu, |\omega| < 2\pi \qquad 21$$

and

$$\Psi''(\omega) = \Phi(\omega+2\pi) - 2\Phi(\omega) + \Phi(\omega-2\pi), \quad 22$$

respectively. $N_1(A)$ is the set of all functions satisfying

$$\Psi''(\omega) = 0, |\omega| < 2\pi; \Psi'(0) = 0; \Psi(0) = 0 \quad 22$$

To determine completely the invisible component of $f(y)$ we must determine the projection onto $N_1(A)$ of the restriction of the Fourier transform of $f(y)$ to the interval $[-4\pi,4\pi]$. This can be determined by solving the following variational problem:

$$\int_{-4\pi}^{4\pi}|F(\omega)-\Phi(\omega)|^2 d\omega = minimum \qquad 24$$

This may be solved by the method of Lagrange multipliers to give

$$\Phi(\omega) = \frac{1}{10}[4F(\omega-2\pi) + 3F(\omega) + 2F(\omega+2\pi) + F(\omega+4\pi) + \lambda - \mu(3 + \frac{\omega}{2\pi})], 0 > \omega > -2\pi, \quad 25$$

$$\Phi(\omega) = \frac{1}{10}[4F(\omega+2\pi) + 3F(\omega) + 2F(\omega-2\pi) + F(\omega-4\pi) + \lambda - \mu(3 - \frac{\omega}{2\pi})], 0 < \omega < 2\pi. \quad 26$$

Using eq.(23), we find for $\lambda$ and $\mu$

$$\lambda = \frac{1}{4\pi}(3I_4 + I_3 - I_2 - 3I_1) \quad 27$$

$$\mu = \frac{3}{16\pi}(7I_4 + 3I_3 + 3I_2 + 7I_1 - 3J_4 - J_3 + J_2 + 3J_1) \quad 28$$

where

$$I_j = \int_{-4\pi+2\pi(j-1)}^{-4\pi+2\pi j} F(\omega)d\omega, j = 1, 2, 3, 4 \qquad 29$$

$$J_j = \int_{-4\pi+2\pi(j-1)}^{-4\pi+2\pi j} \omega F(\omega)d\omega, j = 1, 2, 3, 4 \qquad 30$$

Equations (22) and (23) are used to continue into the region $4\pi > |\omega| > 2\pi$. These formulae solve completely our problem and may be used to determine the impulse response function t(y). The impulse response function is the projection onto the orthogonal complement of the null space of $A$ of the function

$$f(y) = 4sinc(4y) \quad 31$$

From the decomposition theorem we have

$$t(y) = f(y) - \phi(y) \quad 32$$

where $\phi$ is the projection of $f$ onto $N(A)$.

Noting that $F(\omega) = 1$ when $|\omega| < 4\pi$ we can derive

$$\Phi(\omega) \;=\; 1 \;+\; \frac{1}{10}[\lambda \;-\; \mu(3 \;+\; \frac{\omega}{2\pi})], \; 0 > \omega > -2\pi \quad 33a$$

$$\Phi(\omega) \;=\; 1 \;-\; \frac{1}{10}[\lambda \;+\; \mu(3 \;-\; \frac{\omega}{2\pi})], \; 0 < \omega < -2\pi \quad 33b$$

and

$$I_j \;=\; 2\pi; \; J_j \;=\; -5 \;+\; 2\pi j, j \;=\; 1,2,3,4. \quad 34$$

It follows that

$$\lambda \;=\; 0; \; \mu \;=\; 15/4 \quad 35$$

and, with a little more calculation, finally we obtain the transfer function $T(\omega)$, the Fourier transform of $t(y)$.

$$T(\omega) \;=\; \frac{3}{8}(3 \;-\; \frac{|\omega|}{2\pi}), \; |\omega| < 2\pi \quad 36a$$

$$T(\omega) \;=\; \frac{3}{8}(7 \;-\; \frac{3|\omega|}{2\pi}), \; 2\pi < |\omega| < 4\pi \quad 36b$$

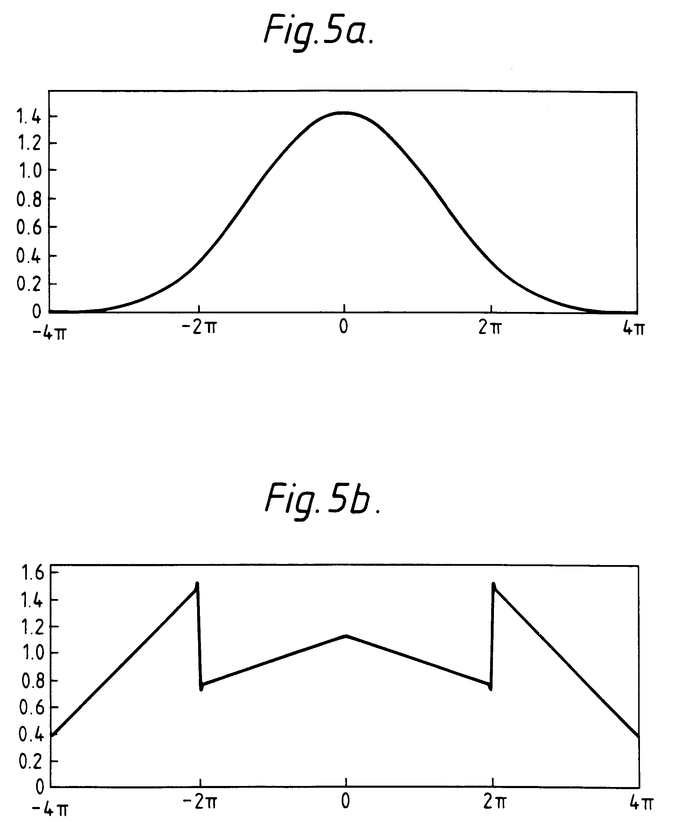

Inspection of the form of this transfer function, shown in figure 5b, shows the enhanced resolution (in that the band is more evenly filled ) compared with the transfer function of a normal confocal fluorescent scanning microscope, shown in figure 5a.

## Claims

1. A scanning confocal microscope including:-
   a first lens system (2) for focussing light to illuminate a small portion of an object (3),
   a second lens system (6) for receiving light, which may be transmitted, reflected or fluorescent, from the small portion of the object and directing such received light onto a detector (11) or detectors,
   means (5) for scanning the object with the focussed light,
   means (12) for storing the output of the detector or detectors to provide a display of the scanned object,
   Characterised by:-
   an optical processing element (7) or elements having either or both a periodic phase and a periodic amplitude weighting by light modulation that receives light from the second lens system and performs an optical processing on such light prior to detection by the detector or detectors whereby the resolution obtained at the detectors is improved.

2. The microscope of claim 2 wherein both phase and amplitude weighting are on a single optical processing plate (7).

3. The microscope of claim 2 wherein the optical processing plate (7) is formed by a first and a second plate (14, 16) fixed together, the first plate having phase weighting and the second plate having amplitude weighting.

4. The microscope of claim 1 wherein the optical processing element (7) or elements has an optical transfer function m(x, y) equal to *cos(2π-Nx/λ).cos(2πNy/λ)* where *N* is the numerical aperture of the first and second lens systems and λ is the wavelength.

5. The microscrope of claim 1 wherein the optical processing element (7) or elements has an optical transfer function m(x, y) equal to *sign(cos(2πNx/λ)).sign(cos(2πNy/λ))* where *N* is the numerical aperture of the first and second lens systems and λ is the wavelength.

6. The microscope of claim 1 wherein an additional lens (8) is arranged between the optical processing element (7) or elements and a pinhole aperture (9).

## Patentansprüche

1. Konfokales Rastermikroskop mit:
   einem ersten Linsensystem (2) zum Fokussieren von Licht zur Beleuchung eines kleinen Bereichs eines Objekts (3),
   einem zweiten Linsensystem (6) zum Empfangen von Licht, das übertragen, reflektiert oder fluoresziert sein kann, vom kleinen Bereich des Objekts und zum Leiten des so empfangenen Lichts auf einen Detektor (11) oder Detektoren,

einer Einrichtung (5) zum rasterartigen Abtasten des Objekts mit dem fokussierten Licht,
einer Einrichtung (12) zur Speicherung der Ausgabe des Detektors oder der Detektoren, um eine Darstellung des rasterartig abgetasteten Objekts zu erzeugen,
gekennzeichnet durch
ein optisches Verarbeitungselement (7) oder Elemente, die einzeln oder gemeinsam eine periodische Phasengewichtung bzw. periodische Amplitudengewichtung durch Lichtmodulation haben, die Licht vom zweiten Linsensystem empfangen und mit diesem Licht eine optische Verarbeitung durchführen, bevor es durch den Detektor oder die Detektoren erfaßt wird, wodurch die durch die Detektoren erzielbare Auflösung verbessert wird.

2. Mikroskop nach Anspruch 1, bei dem sowohl die Phasenals auch die Amplitudengewichtung auf einer einzelnen optischen Verarbeitungsplatte (7) liegen.

3. Mikroskop nach Anspruch 2, bei dem die optische Verarbeitungsplatte (7) durch eine erste und eine zweite Platte (14, 16), die miteinander befestigt sind, gebildet wird, wobei die erste Platte eine Phasengewichtung und die zweite Platte eine Amplitudengewichtung hat.

4. Mikroskop nach Anspruch 1, bei dem das optische Verarbeitungselement (7) oder die Elemente eine optische Übertragungsfunktion m(x, y) haben entsprechend $\cos(2\pi Nx/\lambda).\cos(2\pi Ny/\lambda)$ wobei N die numerische Apertur des ersten und zweiten Linsensystems und $\lambda$ die Wellenlänge ist.

5. Mikroskop nach Anspruch 1, bei dem das optische Verarbeitungselement (7) oder die Elemente eine optische Übertragungsfunktion m(x, y) haben entsprechend $\text{sign}(\cos(2\pi Nx/\lambda)).\text{sign}(\cos(2\pi Ny/\lambda))$ wobei N die numerische Apertur des ersten und des zweiten Linsensystems ist und $\lambda$ die Wellenlänge.

6. Mikroskop nach Anspruch 1, bei dem zwischen dem optischen Verarbeitungselement (7) oder Elementen und einer Lochapertur (9) eine zusätzliche Linse (8) angeordnet ist.


**Revendications**

1. Microscope homofocal à balayage, comprenant :
   un premier système (2) à lentille destiné à focaliser la lumière d'éclairement d'une petite partie d'un objet (3),
   un second système (6) à lentille destiné à recevoir la lumière qui peut être transmise, réfléchie ou émise par fluorescence par la petite partie de l'objet, et à diriger cette lumière reçue sur un détecteur (11) ou plusieurs détecteurs,
   un dispositif (5) de balayage de l'objet avec la lumière focalisée, et
   un dispositif (12) de mémorisation du signal de sortie du détecteur ou des détecteurs pour l'obtention d'un affichage de l'objet balayé,
   caractérisé par
   un élément (7) ou plusieurs éléments de traitement optique ayant soit une pondération périodique en phase, soit une pondération périodique en amplitude, soit ces deux pondérations, par modulation de lumière, qui reçoivent la lumière du second système à lentille et effectuent un traitement optique sur cette lumière avant la détection par le détecteur ou les détecteurs si bien que la résolution obtenue au niveau des détecteurs est accrue.

2. Microscope selon la revendication 1, dans lequel les pondérations en phase et en amplitude sont réalisées sur une seule lame de traitement optique (7).

3. Microscope selon la revendication 2, dans lequel la lame (7) de traitement optique est formée par une première et une seconde plaque (14, 16) fixées l'une à l'autre, la première plaque ayant une pondération en phase et la seconde une pondération en amplitude.

4. Microscope selon la revendication 1, dans lequel l'élément (7) ou les éléments de traitement optique ont une fonction de transfert optique m(x,y) égale à $\cos(2\pi Nx/\lambda).\cos(2\pi Ny/\lambda)$, N étant l'ouverture numérique du premier et du second système à lentille et $\lambda$ la longueur d'onde.

5. Microscope selon la revendication 1, dans lequel l'élément (7) ou les éléments de traitement optique ont une fonction de transfert optique m(x,y) égale à signe(cos(2πNx/λ)).signe(cos(2πNy/λ)), N étant l'ouverture numérique du premier et du second système à lentille et λ étant la longueur d'onde.

6. Microscope selon la revendication 1, dans lequel une lentille supplémentaire (8) est placée entre l'élément (7) ou les éléments de traitement optique et une ouverture (9) en trou d'épingle.

_Fig.1._

LASER

1

5 M

2

3

6

4

7

8

9 10 11

12 STORE

13 DISPLAY

_Fig.2._

16

17

18

15

14

7

Fig.3.

EP 0 475 991 B1

# Fig.4.

EP 0 475 991 B1

## Fig.5a.

## Fig.5b.